# EUROPEAN PATENT SPECIFICATION

(11) **EP 1 498 620 B1**
(45) Date of publication and mention of the grant of the patent: **05.11.2008**
(21) Application number: 03015673.1
(22) Date of filing: 18.07.2003
(51) Int. Cl.: F16C 1/26

(54) **Mounting element for a bowden cable**
Anbaustück für einen Bowdenzug
Elément de montage pour un cable Bowden

(43) Date of publication of application: 19.01.2005
(73) Proprietor: Fico Triad S.A., 08191 Rubi (Barcelona) (ES)
(72) Inventor: Dona-Contero, Juan-Manuel, 08191 Rubi (Barcelona) (ES)
(74) Representative: Hess, Peter K. G.

(56) References cited:
- EP-A- 0 942 184
- DE-A- 19 923 487
- US-A- 5 615 584

## Description

### 1. Technical area

The present invention relates to a mounting element for the mounting of a bowden cable to a support structure, particularly for the use in the automotive area.

### 2. Prior art

The prior art provides different solutions for mounting elements of bowden cables. In general bowden cables are used for the transmission of pulling or pushing forces over longer distances and in different directions. In automotive engineering, bowden cables are for example used as brake cables, clutch cables, accelerator cables or also for the heating adjustment or the like. So, it is often the problem to mount the bowden cable at one end at a fixed support structure, so that the cable sheath can rest upon the stationary support structure, while the pulling cable of the bowden cable actuates a desired element. For this purpose and for a simplified assembly, mounting elements for bowden cables became widely accepted, which can be slid into a support structure. Thereto a U-shaped seat is normally formed into the support structure, which acts as a receptacle for the mounting element. Mostly, the support structure is a car body part, being inside the motor vehicle or a part of an aggregate. For the assembly to the support structure, the mounting element comprises an annular outer mounting slot, with that the mounting element rests against the support structure. For the assembly, the mounting element is slid with the mounting slot into the U-shaped seat of the support structure perpendicular to the direction of the Bowden cable. Due to the U-shape of the support structure, also the position of the mounting element can be defined. The mounting element can just be moved in the direction of the opening of the U. To prevent also this movement after the assembly, the mounting element must be additionally latched with the support structure.

For this purpose, different possibilities can be found in the prior art. So, the US patent with the number 5,272,934 shows a mounting element of the above-described type, which comprises a resilient locking finger, which engages a hole within the support structure.

A similar mounting element is disclosed in the US patent with the number 5,615,584. This document shows a mounting element which comprises again a latching arm having a locking finger, which engages into an opening or a cutout of the support structure to prevent an undesired removal of the mounting element from the support structure. The mounting element of this patent further comprises a flap, which can be pivoted beneath the latching arm, to prevent it from undesired unlatching.

The US patent with the number 4,763,541 also shows a mounting element for a bowden cable, which comprises a finger-like extension to secure the mounting element for an undesired extraction from the support element.

A mounting element of the above-mentioned type is also disclosed in the document EP 942 184 A1. Herein, the latching of the mounting element to the support structure is done by a spring-biased latch, which engages into an opening of the support structure. The latch can be secured in the assembled position, via a securing pin, which is insertable from the outside, so that the latch cannot be displaced anymore.

The above-mentioned mounting elements respectively comprise a securing against the undesired removal from the seat of the support structure. However, these solutions do not provide a solution for the disassembly of the mounting element from the support structure. If a disassembly is needed, the latching elements of the above-described mounting elements must be brought into disengagement with the support structure. This is only possible by appropriate tools and a specific clipping out respectively back bending of the latching elements from the support structure. A destruction of the mounting element during the disassembly of some embodiments cannot be excluded.

Therefore, from the prior art it is the technical problem underlying the present invention to provide a mounting element for a bowden cable, which guarantees a reliable latching with a support structure and which can additionally be disassembled simply and without tools. Further, the mounting element should consist of possibly few parts, should be manufactured cost-efficiently and should be easy to assemble. Additionally, it should comprise no looseable parts.

### 3. Summary of the invention

The present invention solves this problem by a mounting element for a bowden cable according to claim 1. The mounting element for a bowden cable according to the invention, preferably for automotive engineering, at first comprises a mounting body, comprising an at least partially circumferential mounting slot, wherein the mounting slot can be brought into engagement with a substantially U-shaped seat in a support structure by sliding into it. Further, the mounting element according to the invention comprises a latching element for latching of the mounting body with the support structure, wherein the latching element comprises a displaceable latch, a spring and a latching housing, which is open on opposite sides. The latch further comprises a snap element, so that the latch can be latched with the latching housing by inserting it into this.

Therewith, the mounting element according to the invention comprises the advantage to consist substantially only of three components, wherein its assembly is done by a simple inserting of the latch into the latching housing, which allows a very cost-efficient assembly. Due to this simple assembly motion, also an automatic assembly of the latching element is easily possible.

Further, it is advantageous that the spring-biased latch does latch with the support structure particularly save and enduring, so that a particularly reliable latching of the mounting element is achieved.

A further advantage of the inserting, respectively nesting, of the latch through the latching housing is the possibility to provide actuation elements at the side, which is opposed to the latching elements. With these actuation elements, the latch can be pulled back against a spring force, to release the latching with the support structure. So, the mounting element can be dis-mounted from the support structure without destroying it and also without tools.

Additionally, the latching state can be recognized from the position of the actuation element. If the actuation element extends too far out of the latching housing, the latch is not latched to its full extent.

So, the latch preferably comprises an actuation element for the manual de-latching of the latch. The actuation element is preferably provided as a pulling knob and is arranged at the side of the latch, which is opposite to the latching elements. The latch can so easily be grasped by hand or with a nippers at the pulling knob and be drawn against the spring force. So, an easy destruction-free dis-mounting of the mounting element from the support structure is possible.

In a preferred embodiment, the mounting element consists only of three single components. Therewith, it can cost-efficiently be produced and be assembled with less effort.

Preferably, the snap element comprises a conic shape and is latchable with resilient wall elements of the latching housing for the assembly of the latching element.

Particularly preferred the latch comprises a ramp and a latching face, due to which the latch is latchable at a latching window during the mounting of the mounting element at the support structure. So, the mounting element can be fixed at the support structure by a simple sliding into the U-shaped seat of the support structure, wherein the latching occurs automatically.

In a further preferred embodiment, the latching element further comprises a locking element, which is integrally formed with the latching housing. The locking element is used to prevent from a displacement of the latch, i.e. to lock it. So, the latching is secured against an undesired actuation. All elements of the locking element are preferably integrally formed with the latching housing, e.g. by common injection molding. So, further assembly steps are not needed and the elements of the locking element cannot be lost.

Preferably, the locking element comprises a resilient arm, a locking pin, an actuation face, and a first and a second locking pawl. Particularly preferred, the locking pin engages into a locking cavity and therefore prevents a displacement of the latch.

The resilient arm comprises an extension to de-lock the locking pawls of the locking element to be able to release also the additional locking of the latch.

### 4. Short description of the drawing

In the following, the preferred embodiments of the present invention are described with relation to the drawing. Therein shows:
- Fig. 1: an embodiment of the mounting element according to the invention as well as a suitable support structure in a three-dimensional view;
- Fig.2: a preferred embodiment of the latching element according to the invention in a three-dimensional explosionary view;
- Fig. 3: a partial sectional view through a latching element according to fig. 2 in assembled condition;
- Fig. 4: a further embodiment of a latching element in a three-dimensional view, wherein the latching element comprises an additional locking element;
- Fig. 5: a partial sectional view of the latching element according to fig. 4 in assembled and de-locked condition;
- Fig. 6: a partial sectional view of a further embodiment of a latching element with a locking element which is easily releasable.

### 5. Detailed description of the preferred embodiments

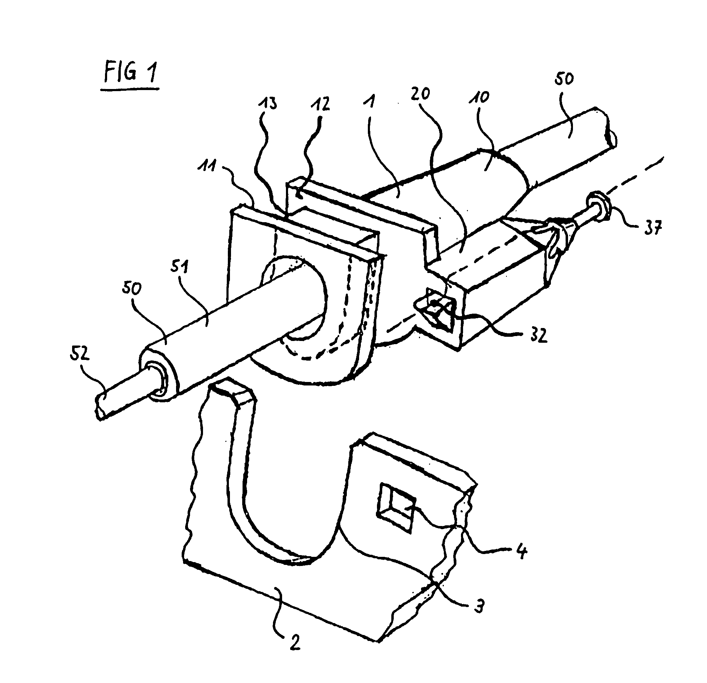

A first preferred embodiment of the present invention is shown in fig. 1. Fig. 1 shows a mounting element 1, a bowden cable 50, as well as a support structure 2 to which the bowden cable 50 should be connected using the mounting element 1.

The mounting element 1 comprises a mounting body 10 through which the bowden cable 50 extends. The bowden cable 50 can loosely extend through the mounting body 10, i.e. to be displaceably arranged as whole within the mounting element 1, or the bowden cable 50 is connected to the mounting body 10 so that a cable sheath 51 of the bowden cable 50 is not displaceable with respect to the mounting body 10. In this case, the cable sheath 51 rests against the mounting body 10 of the mounting element 1, wherein forces can be applied to the support structure 2 after the mounting. The bowden cable 50 further comprises a pulling cable 52 which is displaceably arranged within the cable sheath 51. Via the pulling cable 52 and the cable sheath 51 of the bowden cable 50, usually the desired forces are transmitted.

For the mounting of the mounting element 1 to a support structure 2, the mounting element 1 comprises a first flange 11 and a second flange 12, wherein the flanges are parallely and spaced from each other arranged at the mounting body 10. The flanges are usually arranged perpendicular to the bowden cable 50 which runs through them. Since the first flange 11 and the second flange 12 are spaced from each other, a mounting slot 13 results between them.

Usually, the support structure is a stationary part within a motor vehicle, as for example a sheet metal part, or a support element 15 which is fixed to an aggregate. For receiving the mounting element 1, the support structure 2 comprises an U-shaped seat 3. The U-shaped seat 3 is formed into an essentially flat support structure 2 in the form of a wide indentation. It preferably comprises two parallel side walls, which are connected by a circular arc. Of course, also other shapes like for example rectangular seats are possible and usual.

For the mounting of the mounting element 1 within the support structure 2, the dimensions and the shape of the mounting slot 13 must essentially be these of the U-shaped seat 3 of the support structure 2. If the support structure 2 comprises a U-shaped seat 3 (like shown in fig. 1), then also the mounting slot 13 essentially comprises this shape as a negative shape. At other shapes, e.g. rectangular seats, this applies accordingly.

The mounting element 1 is mounted by sliding it laterally with its mounting slot 13 into the U-shaped seat 3 of the support structure 2. Preferably, the orientation of the mounting element 1 with respect to the support structure 2 is thereby predetermined by the shape of the seat and the corresponding mounting slot. This is also given by a U-shaped seat 3 and a corresponding mounting slot 13, as shown in fig. 1.

If the mounting element 1 is slid into the support structure 2, forces of the cable sheath 51 can be transmitted via the mounting body 10 and the flanges 11 and 12 to the support structure 2. So, the introduced forces act perpendicular to the mounting direction of the mounting element 1. The actuation forces transmitted via the bowden cable can therefore not lead to an undesired de-mounting of the mounting element 1 from the support structure 2.

However, the bowden cable 50 as well as the mounting element 1 itself and the support structure are exposed to vibrations and dynamic movements and therefore inertia forces within the vehicle. To prevent the mounting element 1 from beeing undesiredly released from the support structure 2, the latching element 20 is provided. As shown in fig. 1, the latching element 20 is preferably mounted laterally at the mounting body 10 of the mounting element 1. Fig. 1 shows the latching element 20 in an assembled condition.

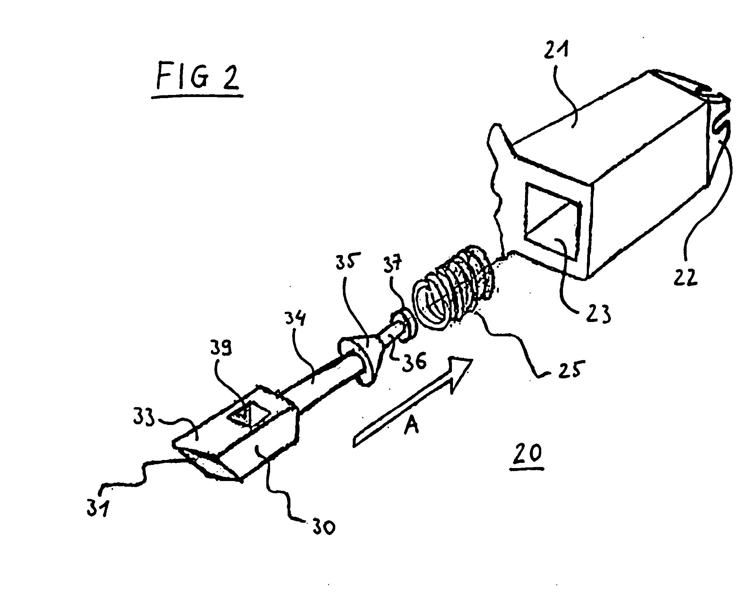

As it can be seen in fig. 2, the latching element 20 comprises of a latching housing 21, a therein displaceable latch 30 as well as a spring 25. The latching housing 21 preferably comprises a square section and it is formed integrally with the mounting body 10. The latching housing 21 has preferably an elongated shape and comprises a through-going opening of a preferably square section. In this opening, a correspondingly shaped displaceable latch 30 is inserted, so that it is displaceable but not rotatable. The latch 30 comprises at one end an inclined ramp 31 and a latching face 32. By this latching face 32 the latch 30 can engage a latching window 4 within the support structure 2. Thereby, a latching of the mounting element 1 with the support structure 2 is given, so that it can not any more being released from the support structure 2 due to vibrations or inertia forces.

The displaceable latch 30 comprises a front guiding area 33 with a preferably square or rectangular profile. A rod 34 is axially connected to the guiding area 33, to which a snap element 35 is connected. The rod 34 comprises a smaller diameter than the latch 30 at its guiding area 33, so that in this area a spring 25 can axially be arranged, which abuts against the guiding area 33. At the snap element axially an actuation element 36, 37 is connected, which acts for the actuation of the latch 30.

For the assembly of the latching element 20, a spring 25 is axially pushed over the actuating element 36, 37 as well as over the snap element 35 to the range of the rod 34. The spring 25 is preferably a usual helical spring, which can be produced of plastic material or metal. Its inner diameter is larger than the diameter of the rod 34, possibly larger than the snap element 35, but smaller than the guiding area 33 of latch 30. Thereby, the spring 25 can rest against the guiding area 33 of latch 30.

The actual assembly of the displaceable latch 30 including the attached spring 25 is done by a simple insertion of the latch 30 into the guiding opening 23 of the latching housing 21. To hold the latch 30, the latching housing 21 comprises resilient wall elements 22, which latch with the snap element 35 of the latch 30 during the insertion of the latch 30.

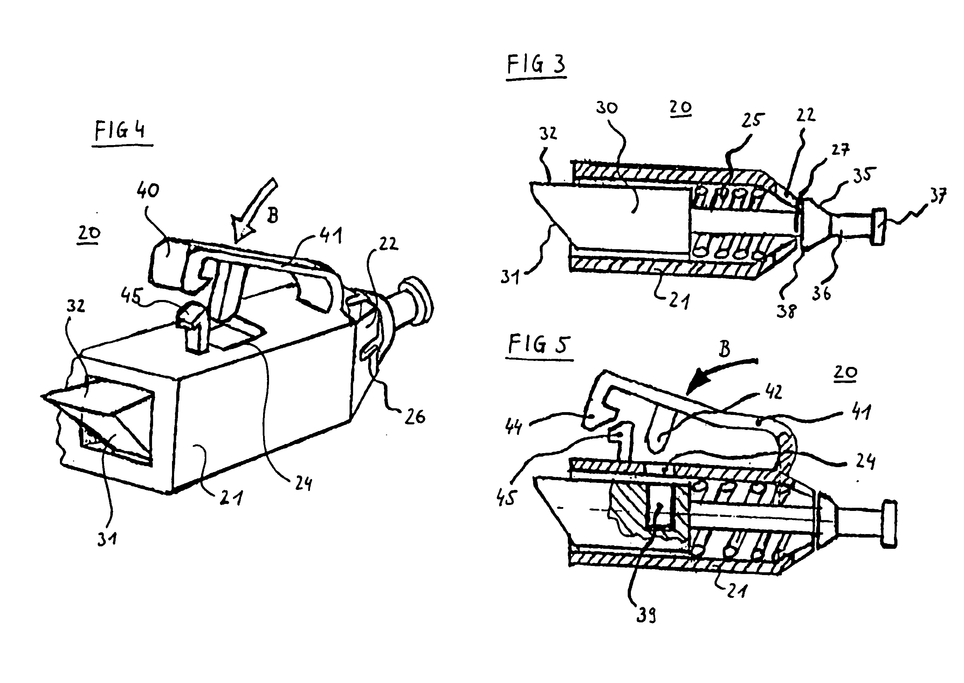

In the embodiment shown in fig. 2, four resilient wall elements 22 are provided which comprise the shape of a frustum of pyramid. The resilient wall elements 22 are hereby each arranged at the side edges of the pyramid and spaced from each other by slots 26 as they can be seen in fig. 4. As already described, the resilient wall elements 22 latch with the snap element 35 of the latch 30. During insertion of the latch 30, the snap element 35, which is preferably provided as a cone, presses the resilient wall elements 22 to the outside. After the snap element 35 has passed the resilient wall elements 22, these snap back to their initial position so that the snap element 35 rests against the resilient wall elements 22.

The spring 25 is biased between the guiding area 33 of the latch 30 and the latching housing 21 in mounted condition. Thereby, the ramp 31 and the latching face 32 of the displaceable latch 30 is pushed partially out of the latching housing 21. The latch 30 as well as the latching housing 21 and the spring 25 are dimensioned so that the ramp 31 extends out of the latching housing 21 in mounted condition. If it is pulled at the actuation element 36, 37 of latch 30 in assembly or de-latching direction A, the ramp 31 will be pulled wholly into the latching housing 21 against the spring force of the spring 25.

A partial cross-sectional view of a mounted latching element 20 is shown in fig. 3. Here, it can be well seen how the snap element 35 rests against the resilient wall elements 22. Further, fig. 3 shows that at the left side of the latching element 20, which is directed to the support structure 2, only the latching face 32 and also the ramp 31 extend. At the opposed side, the actuation element 36, 37 is shown. Herein in form of a pulling knob 37, which is connected with the snap element 35 via an extension 36.

In a further preferred embodiment of the present invention as shown in figs. 4, 5 and 6 the mounting element 1 further comprises a locking element 40. The locking element 40 acts for a locking of the latch 30, so that it is mechanically fixed in its locking position. An undesired actuation of the latch 30 is prevented due to an actuation of the locking element 40. The locking element 40 is attached at the latching housing 21. The locking element 40 is preferably formed integrally with the latching housing 21. The locking element 40 comprises a resilient arm 41, which is mounted at a face of the latching housing 21, a locking pin 42, which extends from the resilient arm 41 in the direction of the latching housing 21 and a first locking pawl 44, which is also mounted at the resilient arm 41. The mating component to the first latching pawl 44 is a second latching pawl 45, which extends from a face of the latching housing 21 in the direction of the first latching pawl 44, to latch with these during an actuation of the locking element 40 in locking direction B. The second latching pawl 45 preferably is also integrally formed with the latching housing 21.

In this embodiment, with locking element 40, the latching housing 21 comprises a window 24, at the side which is opposed to the resilient arm 41, by which the locking pin 42 can enter the inside of the locking housing 21 during an actuation of the locking element 40. The latch 30 comprises a locking cavity 39 at the side which is directed to the locking element 40, which is arranged, so that it receives the locking pin 42 during an actuation of the locking element 40. The latch 30 is thereby in its latching position.

Having this embodiment, a mounting of the mounting element 1 at the support structure 2 is now done as described in the following:

At first, the mounting element 1 is oriented at the mounting structure 2 so that the mounting slot 13 corresponds with the U-shaped seat 3 of the mounting structure 2 in the correct orientation. Then, the mounting element 1 is slid into the U-shaped seat 3 under a slight pressure. The support structure 2 acts on the ramp 31 and thereby displaces the latch 30 against the spring force of the spring 25. Thereby, the ramp 31 and the latching face 32 of the latch 30 is pushed inside the latching housing 21. If the mounting element 1 is slid into the U-shaped seat 3 far enough, the latch 30 arrives at the position of a corresponding latching window 4 in the support structure 2, so that it leaps into its latching position due to the spring force. That means, that the ramp 31 and the latching face 32 again extend out of the latching housing 21 and the latching face 32 latches with the top face of the latching window 4. The mounting element 1 is now safely connected with the mounting structure 2. So, the snap element 35 abuts the latching housing 21 and signalizes that the latching element 20 is completely latched with support structure 2.

For a further securing of this connection, the locking element 40 can be actuated. This is done by simply pushing the resilient arm 41 at the actuation face 47 in locking direction B. Thereby, the locking pin 42 enters the locking cavity 39 of latch 30 through the window 24 within the latching housing 21. The latch 30 is blocked and cannot undesiredly be actuated. The resilient arm 41 is directed away from the latching housing 21 in its unlocked position, as it is shown in figs. 4, 5, and 6. To hold it in its locked position, it is provided with a first locking pawl 44, which locks with a second locking pawl 45 after the actuation of the locking element 40 in locking direction B. The locking pawls 44 and 45 latch with each other during an actuation of the locking element 40 and thereby keep it in the locking position.

A de-mounting of the mounting element 1 from the support structure is now done as follows:

At first the locking of the locking element 40 must be released. For that purpose, the resilient arm 41 of the locking element 40 is moved opposite to the locking direction B and against the holding force, which is provided by the latching of the locking pawls 44 and 45. This movement can be done manually.

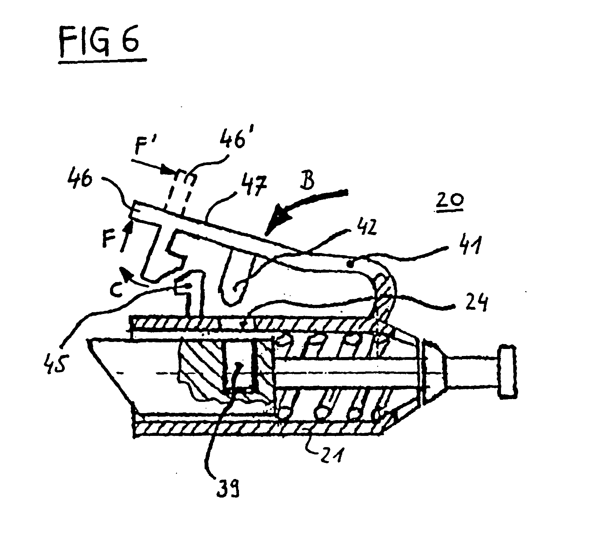

The releasing of the locking element 40 is facilitated by an extension 46 as it is shown in fig. 6. The extension 46 forms an elongation of the resilient arm 41 beneath the first locking pawls 44. If the resilient arm 44 is pulled at the extension 46 to the top with the finger, as this is indicated by the force F, the resilient arm 44 bends, so that the first locking pawl 44 is moved away from the second locking pawls 45, as it is demonstrated by the arrow C. Thereby, the latching of the locking pawls 44 and 45 is released and the locking element 40 snaps back to its unlocked position due to the tension of the resilient arm 41.

Instead of the extension 46, which is a direct elongation of the resilient arm 41, alternatively also an extension 46' can be provided as it is shown in fig. 6 with dotted lines. The extension 46' is probably more favorable to be reached in the mounted condition of the mounting element 1, since it extends to the top, in mounting direction, from the resilient arm 41. In this case, a force F' must be applied for delocking as it is shown in fig. 6.

In any case, the locking pin 41 so releases the latch 30.

The latch 30 can be displaced against the spring force of the spring 25 by a pull at the pulling knob 37 of the latch 30, so that the ramp 31 and the latching face 32 are pulled into the latching housing 21. In this position of the latch 30, the latching of the latching face 32 with the latching window 4 of the support structure 2 is released. The mounting element 1 can then be removed from the U-shaped seat 3 of the support structure 2.

Appropriate plastic materials can be used as materials for the mounting element 1. Alternatively also compound materials as glass fiber reinforced plastic (GRP) or also metals can be used. The latch 30 is preferably also produced of a plastic material. Appropriate spring steel can be used as a material for the spring 25. It is also possible to have a spring made of a comparable hard plastic material. The mounting body 10 including the flanges 11 and 12 as well as the mounting slot 13 is preferably integrally injection molded, together with the latching housing 21 and the elements of the locking element 40. So, the complete mounting element 1 comprises only of three components. It is preferred to injection mold the mounting element 1 directly to its cable sheath 41, in the case that the bowden cable 50 should be firmly connected to the mounting element 1.

### List of reference signs:

- 1: mounting element
- 2: support structure
- 3: U-shaped seat
- 4: latching window
- 10: mounting body
- 11: first flange
- 12: second flange
- 13: mounting slot
- 20: latching element
- 21: latching housing
- 22: resilient wall elements
- 23: guiding opening
- 24: window
- 25: spring
- 27: opening
- 30: latch
- 31: ramp
- 32: latching face
- 33: guiding area
- 34: rod
- 35: snap element
- 36: extension
- 37: pulling knob
- 38: snap face
- 39: locking cavity
- 40: locking element
- 41: resilient arm
- 42: locking pin
- 44: first locking pawl
- 45: second locking pawl
- 46: extension
- 46': extension (further embodiment)
- 47: actuation face
- 50: bowden cable
- 51: cable sheath
- 52: pulling cable

## Claims

1. Mounting element (1) for a bowden cable (50), particularly for automotive engineering, comprising:
a mounting body (10) with an at least partially circumferential mounting slot (13), wherein the mounting slot (13) can be brought into engagement with a substantially U-shaped seat (3) within a support structure (2) by sliding;
a latching element (20) for latching of the mounting body (10) with the support structure (2);
wherein the latching element (20) comprises a latching housing (21) with a displaceable latch (30) and a spring (25) therein, **characterised in that**
the latching housing is open at opposing sides and the latch (30) comprises a snap element (35), which is latchable with the latching housing (21) by insertion of the latch (30) into the latching housing (21).

2. Mounting element according to claim 1, wherein the latch (30) comprises an actuation element (36, 37) for manually de-latching of the latch (30).

3. Mounting element according to claim 2, wherein the actuation element (36, 37) is provided as a pulling knob (37) and wherein the actuating element (36, 37) is arranged at the side which is opposed to the side of the latch (30) that latches with the support structure.

4. Mounting element according to one of the claims 1 to 3, wherein the mounting element (1) comprises only three independent components.

5. Mounting element according to one of the claims 1 to 4, wherein the snap element (35) comprises a conic shape and wherein it is latchable with resilient wall elements (22) of the latching housing (21) for the assembly of the latching element (20).

6. Mounting element according to one of the claims 1 to 5, wherein the latch (30) comprises a ramp (31) and a latching face (32), by which the latch (30) is latchable within a latching window (4) during the mounting of the mounting element (1) at the support structure (2).

7. Mounting element according to one of the claims 1 to 6, wherein the latching element (20) further comprises a locking element (40), which is integrally formed with the latching housing (21).

8. Mounting element according to claim 7, wherein the locking element (40) comprises a resilient arm (41), a locking pin (42), an actuation face (47) and a first (44) and second locking pawl (45).

9. Mounting element according to claim 8, wherein after the actuation of the locking element (40) the locking pin (42) engages within a locking cavity (39) in the latch (30) and wherein the locking pin (42) thereby prevents a displacement of the latch (30).

10. Mounting element according to one of the claims 8 or 9, wherein the resilient arm (41) comprises an extension (46, 46') to de-lock the locking pawls (44, 45) of the locking element (40).

## Patentansprüche

1. Befestigungselement (1) für einen Bowdenzug (50), insbesondere für den Automobilbau, aufweisend:
einen Befestigungskörper (10) mit zumindest einem teilweise umlaufenden Befestigungsschlitz (13), wobei der Befestigungsschlitz (13) mittels Einschieben mit einer im Wesentlichen U-förmigen Aussparung (3) in einer Trägerstruktur (2) in Eingriff gebracht werden kann;
ein Verrastungselement (20), zum Verrasten des Befestigungskörpers (10) mit der Trägerstruktur (2);
wobei das Verrastungselement (20) ein Verrastungsgehäuse (21) mit einem darin angeordneten verschiebbaren Riegel (30) und einer Feder (25) aufweist; **dadurch gekennzeichnet, dass**
das Vernegelungsgehäuse an gegenüberliegenden Seiten offen ist und der Riegel (30) ein Schnappelement (35) aufweist, welches mit dem Verriegelungsgehäuse (21) durch Einführen des Riegels (30) in das Verriegelungsgehäuse (21) verrastbar ist.

2. Befestigungselement gemäß Anspruch 1, wobei der Riegel (30) ein Betätigungselement (36, 37) zum manuellen Entriegeln des Riegels (30) aufweist.

3. Befestigungselement gemäß Anspruch 2, wobei das Betätigungselement (36, 37) als ein Zugknopf (37) bereitgestellt ist und wobei das Betätigungselement (36, 37) an der Seite angeordnet ist, die der Seite des Riegels (30), welcher mit der Trägerstruktur verrastet, gegenüberliegt.

4. Befestigungselement gemäß einem der Ansprüche 1 bis 3, wobei das Befestigungselement (1) nur drei unabhängige Bestandteile aufweist.

5. Befestigungselement gemäß einem der Ansprüche 1 bis 4, wobei das Schnappelement (35) eine konische Form aufweist und wobei es mit beweglichen Wandelementen (22) des Verriegelungsgehäuses (21) zur Montage des Verriegelungselements (20) verrastbar ist.

6. Befestigungselement gemäß einem der Ansprüche 1 bis 5, wobei der Riegel (30) eine Schräge (31) und eine Verriegelungsfläche (32) aufweist, durch die der Riegel (30) innerhalb eines Verriegelungsfensters (4) während der Montage des Befestigungselements (1) an der Trägerstruktur (2) verriegelbar ist.

7. Befestigungselement gemäß einem der Ansprüche 1 bis 6, wobei das Verriegelungselement (20) weiterhin ein Sperrelement (40) aufweist, das integral mit dem Verriegelungsgehäuse (21) ausgebildet ist.

8. Befestigungselement gemäß Anspruch 7, wobei das Sperrelement (40) einen beweglichen Arm (41), einen Verriegelungsstift (42) und eine Betätigungsfläche (47) und einen ersten (44) und einen zweiten Verriegelungshaken (45) aufweist.

9. Befestigungselement gemäß Anspruch 8, wobei nach der Betätigung des Verriegelungselements (40) der Verriegelungsstift (42) mit einem Verriegelungshohlraum (39) in dem Riegel (30) in Eingriff kommt und wobei der Verriegelungsstift (42) dabei ein Verschieben des Riegels (30) verhindert.

10. Befestigungselement gemäß einem der Ansprüche 8 oder 9, wobei der bewegliche Arm (41) eine Verlängerung (46, 46') aufweist, um die Verriegelungshaken (44, 45) des Verriegelungselements (40) zu entriegeln.

## Revendications

1. Élément de montage (1) pour un câble Bowden (50), en particulier pour le génie automobile, comprenant :
un corps de montage (10) avec une fente de montage (13) au moins partiellement circonférentielle, où la fente de montage (13) peut être amenée en prise avec un siège substantiellement en forme de U (3) à l'intérieur d'une structure support (2) par coulissement ;
un élément de verrouillage (20) pour verrouiller le corps de montage (10) avec la structure support (2) ;
où l'élément de verrouillage (20) comprend un boîtier de verrouillage (21) avec un verrou déplaçable (30) et un ressort (26) à l'intérieur, **caractérisé en ce que** le boîtier de verrouillage est ouvert sur des côtés opposés et
le verrou (30) comprend un élément encliquetable (35), qui est verrouillable avec le boîtier de verrouillage (21) par insertion du verrou (30) dans le boîtier de verrouillage (21).

2. Élément de montage selon la revendication 1, dans lequel le verrou (30) comprend un élément d'actionnement (36, 37) pour le déverrouillage manuel du verrou (30).

3. Élément de montage selon la revendication 2, dans lequel l'élément d'actionnement (36, 37) est prévu sous forme de bouton de tirage (37) et dans lequel l'élément d'actionnement (36, 37) est disposé du côté qui est opposé au côté du verrou (30) qui se verrouille avec la structure support.

4. Élément de montage selon l'une des revendications 1 à 3, dans lequel l'élément de montage (1) ne comprend que trois composants indépendants.

5. Élément de montage selon l'une des revendications 1 à 4, dans lequel l'élément encliquetable (35) comprend une forme conique et dans lequel il est verrouillable avec des éléments de paroi élastiques (22) du boîtier de verrouillage (21) pour l'assemblage de l'élément de verrouillage (20).

6. Élément de montage selon l'une des revendications 1 à 5, dans lequel le verrou (30) comprend une rampe (31) et une face de verrouillage (32), par laquelle le verrou (30) est verrouillable à l'intérieur d'une fenêtre de verrouillage (4) lors du montage de l'élément de montage (1) sur la structure support (2).

7. Élément de montage selon l'une des revendications 1 à 6, dans lequel l'élément de verrouillage (20) comprend en outre un élément de blocage (40), qui est formé monobloc avec le boîtier de verrouillage (21).

8. Élément de montage selon la revendication 7, dans lequel l'élément de blocage (40) comprend un bras élastique (41), une broche de blocage (42), une face d'actionnement (40) et un premier (44) et un second (45) cliquet de blocage.

9. Élément de montage selon la revendication 8, dans lequel après l'actionnement de l'élément de blocage (40) la broche de blocage (42) vient en prise à l'intérieur d'une cavité de blocage (39) dans le verrou (30) et dans lequel la broche de blocage (42) empêche ainsi un déplacement du verrou (30).

10. Élément de montage selon l'une des revendications 8 ou 9, dans lequel le bras élastique (41) comprend une extension (46, 46') pour débloquer les cliquets de blocage (44, 45) de l'élément de blocage (40).
